# EUROPEAN PATENT APPLICATION

(11) **EP 3 757 070 A1**
(43) Date of publication of application: **30.12.2020**
(21) Application number: 19306239.5
(22) Date of filing: 30.09.2019
(51) Int. Cl.: C02F 1/14, C02F 1/44, H02S 40/42, C02F 103/00, C02F 103/06, C02F 103/08

(54) **PHOTOVOLTAIC DEVICE WITH THERMAL MANAGEMENT**

(30) Priority: 25.06.2019 WO PCT/FR2019/051563
(71) Applicant: TOTAL SE, 92400 Courbevoie (FR)
(72) Inventor: OBERBECK, Lars, 92400 Courbevoie (FR); PÉRIÉ, Frédéric, 64140 Billere (FR); JACOB, Matthieu, 64170 Cescau (FR); DELAHAYE, Bruno, 91520 Egly (FR)
(74) Representative: Lavoix

(57) **Abstract**

The present invention relates to a device (1) comprising a photovoltaic system (12), a water treatment system (22), a cooling system (14), an electric heating system (24), and a fluidic circuit (26) for circulating said fluid (27) in contact with said electric heating system (24) and through said water treatment system (22), said photovoltaic system (12) providing electricity (121) to said electric heating system (24) and said photovoltaic system (12) exchanging heat with said cooling system (14).

The present invention also relates to a process for treating water, wherein said process implements said device (1).

## Description

The present invention concerns a photovoltaic device with thermal management and a method of managing a photovoltaic device with thermal management.

### Background of the invention

Water from different sources should be treated for providing water for various uses, including drinkable water. Many devices for treating water are known in the art. One important treatment is water desalination. Desalination plays a pivotal role in the water industry and to mitigate water scarcity.

US 2016/0362309 relates to systems and methods wherein hot fluids extracted from the geothermal well may be utilized to generate geothermal energy that can be utilized to power desalination devices to removal minerals and/or salt from produced water from another well. These hot fluids may be recirculated back into the geothermal well to gather heat and to form a closed-looped system that provides thermal energy to the desalination unit. The treated water may be stored for latter agricultural, municipal, and/or other use, or it may be utilized further hydraulic fracturing.

US 2012/0211409 relates to a photovoltaic-powered reverse osmosis system. The system includes a photovoltaic panel for generating electricity and includes a heat exchanger in thermal contact with the photovoltaic panel. The salt-containing feed water is fed to a reverse osmosis unit to produce clean water therefrom. Fluid circuitry, including a pump, circulates the feed water through the heat exchanger to cool the photovoltaic panel and to heat the feed water. It also delivers the heated feed water to the reverse osmosis unit for desalination.

However, performance of devices of the prior art for treating water can still be improved.

### Aims of the invention

The present invention aims to solve the technical problem of providing a device and method for treating water having improved efficiency, notably in term of energy saving.

The present invention also aims to solve the technical problem of providing a device and method for improving electrical energy production efficiency of a solar panel.

The present invention aims to solve the technical problem of providing a device and method for treating water having improved efficiency, notably in term of energy saving, wherein said device and method also improves electrical energy production efficiency of a solar panel.

In particular, the present invention aims to solve the technical problem set forth by the present invention in isolated sites, not connected to an electricity grid and not having sufficient energy heat available to work a water treatment system.

In particular, the present invention aims to solve the technical problem of water desalination, in particular of water desalination in isolated sites, not connected to an electricity grid and not having sufficient energy heat available to work a water treatment system, such as for example in geographical area remote from coastal areas.

### Detained description of the invention

The detailed description is given by reference to the figures for explanatory purposes only, as the invention extends beyond the limited embodiments of the figures. An embodiment, preferred or advantageous feature described, for example in relation to a figure, is combinable with any device or process according to the invention, unless technically impossible.

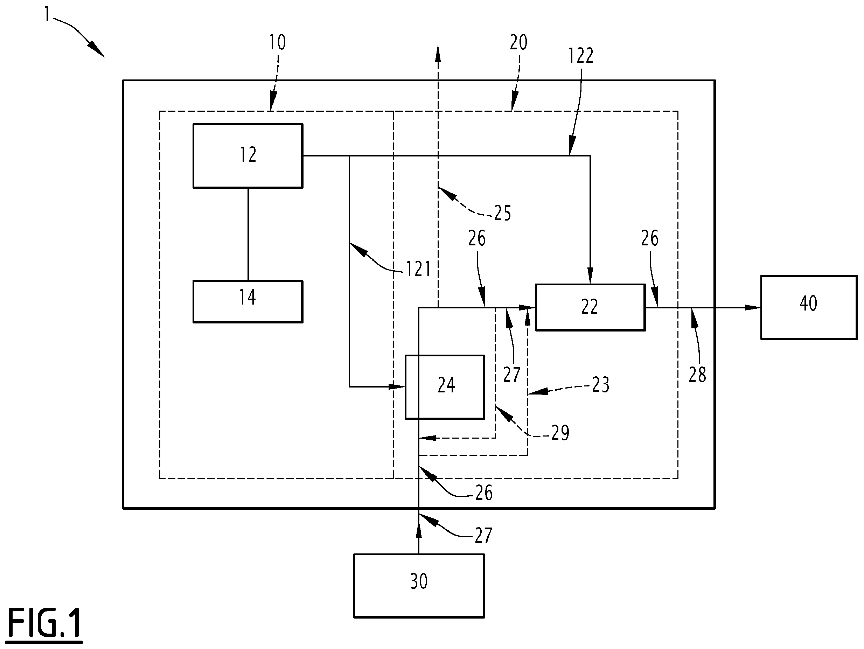

The present invention relates to a device 1 comprising a photovoltaic system 12, a water treatment system 22, a cooling system 14, an electric heating system 24, and a fluidic circuit 26 for circulating said fluid 27 in contact with said electric heating system 24 and through said water treatment system 22 (see for example figure 1), said photovoltaic system 12 providing electricity 121 to said electric heating system 24, and said photovoltaic system 12 exchanging heat with said cooling system 14.

Typically, said photovoltaic system 12 and said cooling system 14 form a photovoltaic unit 10 and said water treatment system 22, said electric heating system 24 and said fluidic circuit 26 form a water treatment unit 20.

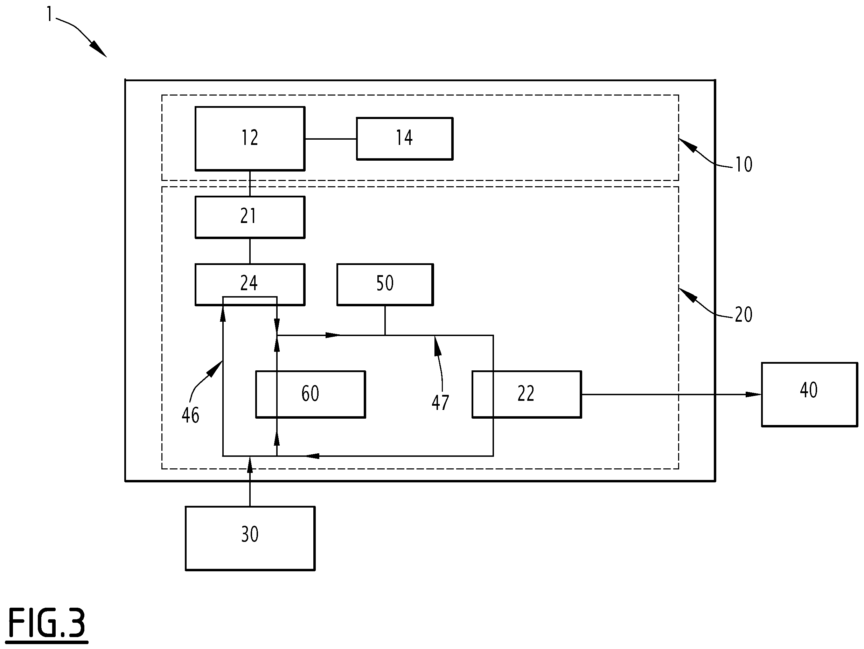

The present invention relates also to a device 1 comprising a photovoltaic system 12, a water treatment system 22, an electric heating system 24, a pressure exchanger 60, a fluidic circuit 46 for circulating a fluid 47 in contact with said electric heating system 24 and through said water treatment system 22, said electric heating system 24 being in electric contact with said photovoltaic system 12, said device comprising a temperature controller 50 controlling the temperature of the fluid in said fluidic circuit 46, said fluid circulating through said pressure exchanger 60 downstream the water treatment system 22, said pressure exchanger 60 feeding said fluid upstream said water treatment system 22 (see for example figure 3).

The present invention relates also to a process for treating water, wherein said process implements a device 1 according to the present invention, comprising a photovoltaic system 12, a water treatment system 22, a cooling system 14, an electric heating system 24, a fluidic circuit 26, , wherein said process comprises circulating a fluid 27 in said fluidic circuit 26, in contact with said electric heating system 24 and through said water treatment system 22, said photovoltaic system 12 providing electricity 121 to said electric heating system 24, and wherein said photovoltaic system 12 exchanges heat with said cooling system 14.

Said electricity 121 is provided as electrical input to operate said electric heating system 24.

Typically, said electric heating system 24 is in electrical contact with said photovoltaic system 12 and in fluidic contact with said water treatment system 22.. Typically, the fluidic circuit 26 comprises electric heating system 24, for example an electrical resistance heating equipment, to transfer heat to the fluid 27 prior to said water treatment system 22.

In the prior art, the fluid used to reduce the temperature of photovoltaic systems are collected for heating a defined space (heating in a building) or for production of domestic hot water. Cooling of solar panels by water circulation to recover this water for thermal purposes (central heating or production of domestic hot water) is known. The solar panels are also air-cooled either to ensure the drying of wet material (biomass/wood/etc.) or for domestic heating. Photovoltaic devices are well known but need further improvement in terms of thermal management. Indeed, the skilled person knows that the electric conversion performance of most PV devices, incl. devices based on crystalline silicon, decreases with increasing temperature. There are efforts to decrease the operating temperature of photovoltaic modules.

The present invention improves the thermal management of solar panels.

In the present invention, typically said fluid 27 contains water and are thus aqueous fluids.

In one embodiment, said fluid 27 is water optionally containing other components.

It has been discovered that a device or method according to the present invention improves the efficiency of said water treatment system 22 by implementing said photovoltaic system 12.

Advantageously, the present invention allows heat (calories) to be removed from said photovoltaic system 12 in order to improve the efficiency of the water treatment.

Accordingly, the present invention improves at the same time the efficiency of a photovoltaic system and of a water treatment system.

In one embodiment, heat produced by said photovoltaic system 12 and collected by a heat exchanger and is transferred to said water treatment system 22.

In one embodiment, said fluid 27 is heated by said electric heating system 24 before entering said water treatment system 22.

In one embodiment, electrical energy collected from said photovoltaic system 12 is used in addition for a different purpose than providing only electricity to said electric heating system 24.

In one embodiment, electrical energy collected from said photovoltaic system 12 is used in part for providing electricity 121 to said electric heating system 24 and in part for a different purpose.

Typically, said photovoltaic system 12 comprises a plurality of solar panels.

Preferably, said photovoltaic system 12 provides electric energy 122 to said water treatment system 22 as electrical input to operate said water treatment system 22.

Advantageously, the electric energy of said photovoltaic system 12 is used to transfer heat to said fluid 27.

In one embodiment, said photovoltaic system 12 provides electric energy to electrically powered devices.

In one embodiment, said photovoltaic system 12 provides electric energy 122 to said water treatment system 22 and electric energy 121 to said electric heating system 24.

Advantageously, by reducing the temperature of solar panels by way of saidcooling system 14, the present invention improves electrical energy production efficiency of solar panels.

Advantageously, in an embodiment, increasing the temperature of said fluid 27 reduces the dynamic viscosity of said fluid 27.

Advantageously, in an embodiment, increasing the temperature of said fluid 27 reduces the consumption of electrical energy required to transfer a given quantity of fluid 27 through said water treatment system 22.

Advantageously, in an embodiment, the lower the solar panel temperature, the better the electrical production efficiency. For example, a solar panel with a temperature coefficient of -0.5%/°C loses 0.5% relative in power output with 1°C increase in temperature for typical operating temperatures.

Advantageously, increasing the temperature of said fluid 27 reduces the consumption of energy on thermal water treatment system or method.

Advantageously, increasing the temperature of said fluid 27 increases the mobility of ions typically contained in said fluid 27 and improves the transfer through said water treatment system 22, for example in particular in case of treatment involving one or more electrodialysis membranes. Indeed, ion mobility increases with temperature thereby improving performance of dialysis of 85% between 25 and 70°C.

In one embodiment, said water treatment comprises a chemical and/or biological reaction in said water treatment system 22, thereby modifying the composition of said fluid 27. It is referred to as fluid modification in the present invention. Advantageously, increasing the temperature of said fluid 27 increases the reaction kinetics of said fluid 27 when said fluid 27 is modified by chemical and/or biological reaction. Accordingly, in one embodiment the present invention improves chemical and/or biological reactions by improving reaction kinetics.

Advantageously, the present invention improves the electrical energy production efficiency, the water treatment efficiency and the global process (or method or system) efficiency.

Advantageously, the water treatment benefits from a temperature increase either by modifying the dynamic viscosity or by modifying the reaction kinetics, in particular in case of a chemical and/or biological oxidation reaction. An example of the modification of the dynamic viscosity: between 25 and 85°C the dynamic viscosity decreases from 0.000891 kg/ms to 0.000334 kg/ms, a decrease of 62.5%.

In the case of membrane separation, the transmembrane flow depends on the temperature and therefore on the viscosity of the fluid according to the relationship :
JT = JT0 µT/µT0 either by considering the temperatures of 25 and 85°C J85= 0.000891/000334.J25, i.e. J85 = 2.67.J25.

A heat transfer between said photovoltaic system 12 and said water treatment system 22 benefits to both unitary systems (12 and 22) (and to both unitary operations).

Advantageously, the coupling and integrated photovoltaic - water treatment systems and methods according to the present invention offer a better energy efficiency than the installation not benefiting from heat exchange between the photovoltaic and water treatment systems. Advantageously, Operational expenditure (OPEXs) can be expected to decrease through the implementation of heat exchange

Advantageously, said electric heating system 24 is used to facilitate the thermal optimization of the system 1. In particular, the present invention allows the electrical energy provided by the cooling of the PV panel to be used for working the electric heating system 24. Advantageously, the surface temperatures of the photovoltaic panels of the photovoltaic system 12 and the temperature of the fluid 27 are optimized separately. The preferred parameters to be adjusted or monitored to control the temperature of the photovoltaic panels in the photvoltaic system 12 and the temperature of the water treatment system 22 are the heat exchange surface, the materials and design of the cooling system 14, and of the electric heating system 24, the circulation rate in the cooling circuit 16, the circulation rate in the fluidic circuit 26 and the flow rate of the fluid 27 in contact with said electric heating system 24 (or the circulation rate in the fluidic circuit 26).

An advantage of the present invention is to implement photovoltaic panels that do not require the use of materials that are resistant to corrosion.

In one embodiment, said electric heating system 24 is resistant to corrosion. Appropriate material are known by the skilled person.

Advantageously, the present invention limits the influence of intermittency related to solar resources, typically without using battery electricity storage, or by limiting the use of a battery to completely replace photovoltaic panels.

In one embodiment, said electric heating system (24) is a water heating system.

Typically, said electric heating system 24 is selected from the group consisting of immersion heaters, circulation heaters, electrode heaters, induction heaters, etc.

In one embodiment, the electric contact between said PV system 12 and said electric heating system 24 comprises a modulator 21 modulating the electricity provided to said electric heating system 24, and thereby advantageously improves the electric heating system by better supporting intermittencies in the electricity 121, 122 provided by the PV system 12. Such modulator 21 is only represented on figure 3, but a device or process according to figure 1, 2, 3 or any other embodiment according to the invention may comprise such a modulator 21.

In one embodiment, said electric heating system 24 comprises a heat storage system. Advantageously, a heat storage system (comprising or not active materials storing heat or a passive heat storage system (like for Domestic Hot Water)) improves the electric heating system by better supporting intermittencies in the electricity 121, 122 provided by the PV system 12.

A device or process according to figure 1, 2, 3 or any other embodiment according to the invention may comprise such a heat storage system. Typically, a heat storage system is in contact with the fluidic circuit 26.

In one embodiment, said device comprises a buffer reservoir in a position to feed said fluid 27 by gravity flow to said water treatment system 22. Advantageously, such buffer reservoir allows the system to run with or without pump and may allow to bring water by gravity flow.

Typically, the electric heating system 24 is used to heat up the fluid 27 which is fed to the water treatment system 22.

In one embodiment, said cooling system 14 comprises or consists of a passive air cooling.

In one embodiment, said cooling system 14 comprises or consists of a cooling fluid 17 circulating in a cooling circuit 16. Typically, in such an embodiment, said cooling system 14 comprises a heat exchanger with a cooling circuit 16 for circulating a cooling fluid 17 through said heat exchanger.

Typically, said cooling system 14 is selected from the group consisting of plate heat exchanger, solid thermal exchanger, solid phase change material coupled with solid thermal exchanger, flat coil polymeric exchanger etc.

Typically, the cooling system 14 is a system added to one or more photovoltaic panels. The cooling fluid 17 typically circulates to extract heat and cool down the panel.

In one embodiment, said cooling fluid 17 and said fluid 27 are different in their chemical composition.

The present invention has the technical advantage of controlling the quality of the cooling fluid 17 thereby controlling or optimizing operating conditions of the cooling system 14 and/or the electric heating system 24.

An advantage of the present invention is also to limit or even eliminate the formation of a biofilm in the cooling fluid 17.

Typically, the cooling fluid 17 is selected from the group consisting of a mono- or multi-phases aqueous or non-aqueous fluid, for example water, a gaz, for example air, a coolant, a liquid with one or more phase change materials (PCM), and any mixture of at least two of these components.

In one embodiment, said cooling fluid 17 comprises or consists of a gas, for example air.

In one embodiment, the cooling fluid 17 is a coolant.

In one embodiment, said cooling fluid 17 comprises or consists of one or more heat transfer compound, for example one or more phase change materials (PCM).

In one embodiment, the cooling circuit 16 comprises one or more phase change materials either suspended in the cooling fluid 17 (and part of the fluid composition) or fixed in the cooling system 14 in contact with said cooling fluid 17 to exchange easily heat with said cooling fluid 17.

In one embodiment, the fluid circuit 26 comprises one or more phase change materials either suspended in the fluid 27 (and part of the fluid composition) or fixed in a dedicated area of the fluidic circuit 26 in contact with said fluid 27 to easily exchange heat with said fluid 27.

By using a phase change material, heat recovery is maximized by recovering the latent heat of fusion from the phase change material chosen to change phase at a temperature below the surface temperature of the photovoltaic panel(s) of the photovoltaic system 12 and corresponding to the operating temperature of the water treatment system 22 (e. g. 45°C for reverse osmosis). Advantageously, this constant temperature heat recovery is obtained without prejudice to the recovery of the heat corresponding to the temperature difference between the surface temperature of the photovoltaic panel(s) of the photovoltaic system 12 and the temperature of the cooling fluid, containing the phase change material according to this embodiment.

Advantageously, said cooling fluid 17 circulates in closed loop in said cooling circuit 16.

An advantage of a closed loop of said cooling circuit 16 during operation is to avoid clogging problems with the cooling circuit 16, notably by limiting the formation of deposits in the cooling circuit 16.

In one embodiment, said cooling fluid 17 exchanges heat with photovoltaic system 12 through said cooling system 14.

In one embodiment, said cooling system 14 reduces the temperature of said photovoltaic system 12.

Advantageously, said fluid 27 exchanges heat with said electric heating system 24 before entering said water treatment system 22.

Preferably, said water treatment system 22 improve its performances at higher temperature or require a process step at higher temperature than feed temperature.

Typically, said water treatment system 22 is a treatment of industrial or domestic water in all aspects of transformation (including for example chemical (oxidation, reduction), physics (ultrasound, precipitation) or separation (membrane techniques, evapo concentrations, evapo crystallization), humidification, dehumidification).

Advantageously, said water treatment system 22 is implemented where the application benefit from a heat supply, such as for example pump and treat, venting, sparging, in situ oxidation, in situ electrical treatment, such as for example for supplying hot water to an electrode, in situ or ex situ biodegradation, mobilisation by steam sweeping.

In one embodiment, said water treatment system 22 is selected from the group consisting of a desalination system (microfiltration, ultrafiltration, reverse osmosis, nanofiltration, electrodialysis, distillation/evaporation, humidification-deshumidification, solvent extraction, clathrate based desalination), an oxidation system (ozone, any advanced oxidation processes), a bioreactor, a solid-liquid-liquid separation process (flotator, hydrocyclone, settling tanks, centrifugation), a liquid-liquid separation process, a liquid gas separation process, a thermal treatment such as evaporation, evapo-concentration, humidification-dehumidification, a membrane separation system, a treatment of industrial or domestic water, of natural surface or groundwater including contaminated groundwater, and combination thereof.

Typically, said device comprises one or more controller selected from the group consisting of a controller of the flow rate of the cooling fluid 17 in the cooling circuit 16, a controller of the flow rate of the fluid 27 in the fluidic circuit 26, a controller of the temperature of the cooling fluid 17 in the cooling circuit 16, a controller of the temperature of the photovoltaic system 12, a controller of the temperature of the fluid 27 in the fluidic circuit 26. The controllers are not specifically shown on the figures, except the temperature controller 50 on figure 3 as an illustrative purpose of an embodiment.

A control system is used to optimize and/or enhance the efficiency and the flux of water treated based on a double loop heat extraction system according to the present invention. The control system is designed to maximize the heat recovery from the panel of the photovoltaic unit 10 and adjust the required amount of heat to manage the water treatment unit 20. In an embodiment, the control system allows setting the flow rates and/or the temperatures to the selected values. In an embodiment, the control system adjusts all required parameters for the designed water treatment unit 20 including pressure of unit 20.

In an embodiment, the fluidic circuit 26 includes a purge 25 and a pressure control system.

In an embodiment, the fluidic circuit 26 comprises a temperature controller 50 controlling the temperature of the fluid in said fluidic circuit 26.

In an embodiment, the device 1 comprises a pressure exchanger 60, said fluid 27 circulating through said pressure exchanger 60 downstream the water treatment system 22, said pressure exchanger 60 feeding said fluid upstream said water treatment system 22. Typically the device 1 comprises a pressure controller (not shown in the figures).

One closed loop for heat extraction from the PV panels is represented by said cooling circuit 16 and one loop for the water treatment is represented by said fluidic circuit 26. The fluid 27 is fed to said water treatment system 22 after temperature increase in contact with said electric heating system 24. This control system is designed for thermal management of the photovoltaic system 12 and the feed in fluid 27 before the water treatment system 22, for pressure regulation of the cooling circuit 16, and the fluidic circuit 26, for the optimization of the production and/or efficiency of the photovoltaic system 12 and of the water treatment system 22.

In one embodiment, the control system comprises a storage device storing the electrical energy produced by the photovoltaic system 12 for the optimization or extension of the functioning of said water treatment system 22 for example further the sunset or in case of variation to solar exposition of the photovoltaic system 12. In one embodiment, the energy storage comprises or consists of one or more batteries for storing electricity produced by the photovoltaic system 12.

In one embodiment, the control system comprises a storage device storing the heat produced by the photovoltaic system 12 though the heater 14 for the optimization or extension of the functioning of said water treatment system 22 for example further the sunset or in case of variation to solar exposition of the photovoltaic system 12.

In one embodiment, the energy storage comprises or consists of one or more heat storage devices, such as for example coolant, or water tanks or device working with PCM, for storing heat produced by said water treatment system 22.

In one embodiment, the thermal management comprises one or more devices measuring as input the temperature of one or more solar panels of the photovoltaic system 12, the temperature of the electric heating system 24, the temperature of the water source 30 or the fluid 27 before upstream the electric heating system 24 and the temperature of the fluid 27 before water treatment system 22 and after the electric heating system 24.

Preferably, the regulation of the thermal management is performed by controlling the speed of the flow through the closed cooling circuit 16, of the flow through the fluidic circuit 26, in relation with the dimensions of the heat exchanger 14, and in relation with the dimensions of the electric heating system 24, in order to keep the temperature of the PV panel(s) of the photovoltaic system 12 at the minimum or optimal temperature, and the temperature at the input of the water treatment system 22 at a maximum or optimal temperature, respecting constraint of such water treatment system 22 such as for example a reverse osmosis system to avoid any degradation thereof. Typically, the speed and the flow of the fluids is controlled by pumps and valves in the fluidic circuits.

A system of valves and purge can be used to regulate the temperature in the fluidic circuit 26.

In one embodiment, the device 1 comprises a pressure regulation system.

In one embodiment, the pressure regulation system controls the pressure of the cooling fluid 17 inside the cooling system 14 (typically on the back of the PV panels) and/or of the fluid 27 in contact with said electric heating system 24, within limits defined by the design of the cooling system 14, and/or electric heating system 24.

In one embodiment, the pressure regulation system monitors the pressure of fluid 27 feeding the water treatment system 22, thereby adjusting the flow at the optimal pressure for operating the water treatment system 22, typically depending on the treatment to perform.

Advantageously the pressure regulation system regulates (or controls) the pressure to compensate intermittency of the solar irradiance of the photovoltaic system 12.

For example, the pressure regulation system comprises one or more clark pumps or any type of pressure exchanger.

In one embodiment, said photovoltaic unit 10 and/or said water treatment unit 20 comprise storage tank. Advantageously, one or more storage tanks smooth out the intermittency of photovoltaic system performance and/or the cooling system performance. In such an embodiment, it is possible to extend the optimal heat exchange conditions beyond the moment when the irradiation decreases rapidly and becomes less than optimal for the photovoltaic system.

Typically, said fluidic circuit 26 is fed by a source 30 of water to be treated, and said fluid 27 comprises or consists of water to be treated.

Water source 30 is ground water, produced water, process water, industrial water, drinking water, purified water, deionized water, rain water, domestic water, tap water, river or lake water, waste water, sea water, brackish water, steam condensate, melted ice, contaminated water, etc.

In one embodiment, the treated fluid 28 forms a modified fluid, typically fluid having undergone a chemical and/or biological reaction.

In one embodiment, the treated fluid 28 forms a clean fluid, typically clean water.

In one embodiment, said clean or modified fluid is collected and/or stored in a tank 40.

Accordingly, the device 1 comprises one or more water tank for the collection of (clean) water after its treatment in the water treatment system 22.

In one embodiment the process of the invention comprises desalinizing water from a water source 30 by said water treatment system 22.

In one embodiment the process of the invention comprises modifying the composition or the quality of a water from a water source 30 by said water treatment system 22.

### In the figures:

Figure 1 is a schematic representation of a system 1 or process according to one embodiment of the present invention.

In an example, water is collected from a source 30. Said water is circulated in a fluidic circuit 26. Such water represents a fluid 27 according to the invention and circulates in contact with an electric heating system 24. Downstream said electric heating system 24, said fluid 27 passes through a water treatment system 22, for example a desalination system comprising a reverse osmosis membrane, wherein said fluid 27 is modified as a treated fluid 28 by said water treatment system 22. Downstream said water treatment system 22, the treated fluid 28 is sent to a tank 40 and/or to a recirculation pipe for circulating upstream and/or downstream said electric heating system 24. The fluid 27 coming directly from the source 30 passes through the electric heating system 24 . In an embodiment, said electric heating system 24 is controlled by a controller to regulate the temperature at the input of the water treatment system. The PV panel 12 provides electricity 121 to the electric heating system 24. The PV panel 12 provides electricity 122 to the water treatment system 22.

In one embodiment, said device 1 comprises at least one pipe 23 to evacuate said fluid 27 downstream said electric heating system 24 and thereby by-passing said electric heating system 24, for example to regulate pressure and temperature of the fluid in contact with the electric heating system 24 and at the input of the water treatment system 22.

The water treatment unit 20 may also comprise a recirculation pipe 29 downstream the electric heating system 24 and upstream the water treatment system 22, said recirculation pipe 29 feeding the fluidic circuit 26 upstream the electric heating system 24.

Solar energy is transformed into electricity by the photovoltaic system 12. The solar panels of the photovoltaic system 12 are cooled by extracting heat by the cooling system 14. Heat is extracted from the photovoltaic system 12 at the level of the cooling system 14.

The electric heating system 24 is transferring heat to the fluid 27. Electricity 121 is provided to the electric heating system 24 by the photovoltaic system 12.

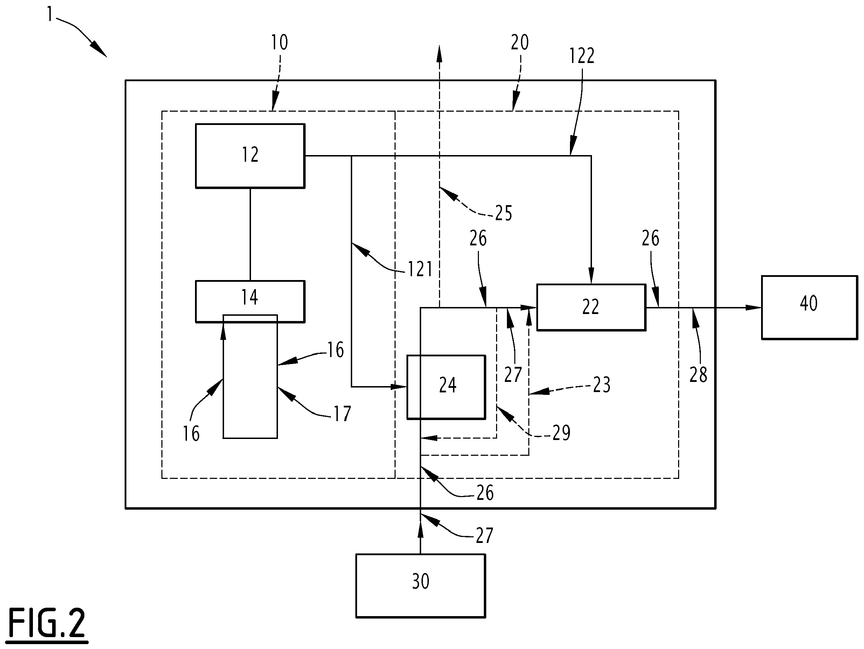

In one embodiment, as illustrated on Figure 2, a cooling circuit 16 containing said cooling fluid 17 circulates in the cooling system to extrat heat from the photovoltaic system 12. Advantageously, the cooling fluid 17 is physically separate from the fluidic circuit 26 containing said fluid 27. Advantageously, according to the invention this specific configuration of the two fluidic circuits improves the thermal management by separating the function of the fluids. The cooling fluid 17 is dedicated to the transfer of heat from the photovoltaic system 12 through the cooling system 14 and the fluid 27 is dedicated to the water treatment system 22. In one embodiment, the photovoltaic unit 10 comprises one or more materials improving adhesion of the heat exchanger and/or improving heat transfer between the photovoltaic system 12 and the heat exchanger 14

Circulation pumps allows circulating the fluids properly according to the skilled person knowledge. Control of temperature, pressure, flow rate, quality of the fluids, etc. are also performed according to the skilled person knowledge.

Figure 3 is a schematic representation of a system 1 or process according to one embodiment of the present invention.

In figure 3, device 1 comprises a photovoltaic system 12, a water treatment system 22, an electric heating system 24, a pressure exchanger 60, a fluidic circuit 46 for circulating a fluid 47 in contact with said electric heating system 24 and through said water treatment system 22, said photovoltaic system 12 providing electricity to work said electric heating system 24, said device comprising a temperature controller 50 controlling the temperature of the fluid in said fluidic circuit 46, said fluid circulating through said pressure exchanger 60 downstream the water treatment system 22, said pressure exchanger 60 feeding said fluid upstream said water treatment system 22. The fluid to be treated by water treatment system 22 may be fed from a water source 30. The fluid 46 after water treatment may be sent to a storage tank 40. In one embodiment, the photovoltaic unit 10 comprises one or more materials improving heat transfer between the photovoltaic system 12 and the heat exchanger 14.

## Claims

1. A device (1) comprising a photovoltaic system (12), a water treatment system (22), a cooling system (14), an electric heating system (24), and a fluidic circuit (26) for circulating said fluid (27) in contact with said electric heating system (24) and through said water treatment system (22), said photovoltaic system (12) providing electricity (121) to said electric heating system (24) and said photovoltaic system (12) exchanging heat with said cooling system (14).

2. The device according to claim 1, wherein said fluid (27) exchanges heat with said electric heating system (24) before entering said water treatment system (22).

3. The device according to any one of claims 1 to 2, wherein said cooling system (14) comprisses a cooling fluid (17) cooling said photovoltaic system (12) by exchanging heat between said cooling fluid (17) and said photovoltaic system (12).

4. The device according to claim 3, wherein said cooling system (14) comprises or consists of a cooling fluid (17) circulating in a cooling circuit (16).

5. The device according to any one of claims 1 to 4, wherein said photovoltaic system (12) provides electric energy to said water treatment system (22).

6. The device according to any one of claims 1 to 5, wherein said electric heating system (24) is a water heating system.

7. The device according to any one of claims 1 to 6, wherein said electric heating system (24) comprises a heat storage system .

8. The device according to any one of claims 1 to 7, wherein said device comprises a buffer reservoir in a position to feed said fluid (27) by gravity flow to said water treatment system (22).

9. The device according to any one of claims 1 to 8, wherein said cooling system (14) is controlled by a controller to reduce temperature variations of said photovoltaic system (12).

10. The device according to any one of claims 1 to 9, wherein said fluidic circuit (26) is fed by a source (30) of water to be treated, and said fluid (27) comprises or consists of water to be treated.

11. The device according to any one of claims 1 to 10, wherein said water treatment system (22) is selected from the group consisting of a desalination system, an oxidation system, a bioreactor, a solid-liquid-liquid separation process a liquid-liquid separation process, a liquid gas separation process, a thermal treatment such as evaporation, evapo-concentration, humidification-dehumidification, a membrane separation system, a treatment of industrial or domestic water, of natural surface or groundwater including contaminated groundwater, and combination thereof.

12. The device according to any one of claims 1 to 11, wherein said device comprises one or more controller selected from the group consisting of a controller of the flow rate of the cooling fluid (17) in the cooling circuit (16), a controller of the flow rate of the fluid (27) in the fluidic circuit (26), a controller of the temperature of the cooling fluid (17) in the cooling circuit (16), a controller of the temperature of the photovoltaic system (12), a controller of the temperature of the fluid (27) in the fluidic circuit (26).

13. A process for treating water, wherein said process implements a device (1) according to any one of claims 1 to 12, comprising a photovoltaic system (12), a water treatment system (22), a cooling system (14), an electric heating system (24), a fluidic circuit (26), wherein said process comprises circulating a fluid (27) in said fluidic circuit (26), in contact with said electric heating system (24) and through said water treatment system (22), said photovoltaic system (12) providing electricity (121) to said electric heating system (24) and wherein said photovoltaic system (12) exchanges heat with said cooling system (14).

14. The process according to claim 13, wherein said process comprises desalinizing water from a water source (30) by said water treatment system (22).

15. The process according to claim 14, wherein said process comprises modifying the composition or the quality of a water from a water source (30) by said water treatment system (22).
